# NEUE EUROPÄISCHE PATENTSCHRIFT

(11) **EP 1 929 163 B2**
(45) Veröffentlichungstag und Bekanntmachung des Hinweises auf die Entscheidung über den Einspruch: **26.11.2014**
(45) Hinweis auf die Patenterteilung: 02.09.2009
(21) Anmeldenummer: 06792245.0
(22) Anmeldetag: 23.09.2006
(51) Int. Cl.: F16B 37/12, F16B 33/00, B25B 27/14, B25B 21/00

(54) **GEWINDEBUCHSE, VERFAHREN ZUM ERNEUERN EINES GEWINDES UND WERKZEUG HIERFÜR**
THREADED BUSH, METHOD FOR RENEWING A SCREW THREAD AND TOOL USED FOR THAT PURPOSE
DOUILLE TARAUDEE, PROCEDE POUR REMPLACER UN FILETAGE ET OUTIL NECESSAIRE A LA REALISATION

(30) Priorität: 30.09.2005 DE 102005048088
(43) Veröffentlichungstag der Anmeldung: 11.06.2008
(73) Patentinhaber: Adolf Würth GmbH & Co. KG, 74653 Künzelsau (DE)
(72) Erfinder: HUMM, Siegfried, 74214 Schöntal-Westernhausen (DE); WUNDERLICH, Andreas, 74653 Kupferzell (DE)
(74) Vertreter: Patentanwälte Ruff, Wilhelm, Beier, Dauster & Partner
(86) Internationale Anmeldenummer: PCT/EP2006/009255
(87) Internationale Veröffentlichungsnummer: WO 2007/039154

(56) Entgegenhaltungen:
- EP-A- 0 529 173
- EP-A1- 0 212 638
- DE-A1-102004 021 484
- DE-U1- 8 717 311
- DE-U1-202004 008 389
- DE-U1-202005 005 872
- FR-A- 1 303 509
- FR-A1- 2 450 520
- GB-A- 593 440
- GB-A- 1 603 117
- GB-A- 2 223 436
- GB-A- 2 237 615
- US-A- 3 151 330
- US-A- 3 280 666
- US-A- 3 322 005
- US-A- 3 864 806
- US-A- 5 617 623
- US-A1- 2002 102 146
- 'Druckschrift von Kerb-Konus mit der Druck-Nummer 30.06.03'
- 'Druckschrift von Kerb-Konus mit der Druck-Nummer 30.11.04'
- 'Druckschrift 30 ¨Gewinde für Kunstsfoffe und Holz¨von Kerb Kon'
- 'Druckschrift 20 ¨Gewinde für Metalle¨ von Kerb-Konus'

## Beschreibung

Die Erfindung betrifft eine Gewindebuchse gemäß dem Oberbegriff des Anspruchs 1, mit deren Hilfe man entweder ein Gewinde einer Bohrung erneuern oder in eine Bohrung zum ersten Mal ein Gewinde einbringen kann. Die Erfindung betrifft ebenfalls ein Verfahren gemäß dem Oberbegriff des Anspruchs 6 zum Einbringen einer solchen Gewindebuchse und ein Werkzeug gemäß dem Oberbegriff des Anspruchs 12 hierfür. Solche Gewindebuchsen und Verfahren sind aus Dokument GB-A-2 237 615 bekannt; ein solches Werkzeug ist aus Dokument GB-A-1 603 117 bekannt.

Gewindebuchsen zum Erneuern oder Reparieren eines Gewindes in einer Bohrung sind bekannt, beispielsweise zum Reparieren von Zündkerzengewinden bei Verbrennungsmotoren.

Diese Gewindebuchsen haben an ihrer Innenseite das zu erstellende Innengewinde und an ihrer Außenseite ein Gewinde, mit deren Hilfe die Buchse in dem Bauteil eingeschraubt wird. Außerdem haben sie an ihrer späteren Außenseite einen Bund, der das Einschrauben begrenzt. Im Bereich ihres gegenüberliegenden Endes sind die Gewindebuchsen leicht konisch ausgebildet, so dass die dort vorhandenen äußeren Gewindegänge noch nicht vollständig in das Gegengewinde eingreifen.

Zum Einbringen dieser bekannten Gewindebuchsen ist es erforderlich, in die Bohrung zunächst das Gegengewinde mit einem Werkzeug zu schneiden. Die dabei entstehenden Gewindespäne müssen ausgeblasen werden. Anschließend wird die Gewindebuchse auf ein spezielles Eindrehwerkzeug aufgedreht und dann mit Hilfe dieses Eindrehwerkzeugs in das vorher geschnittene Gewinde eingedreht. Gegen Ende des Einschraubvorgangs, wenn der Bund an der Außenseite zur Anlage gelangt, wird durch die spezielle Form des Eindrehwerkzeugs der Endbereich der Buchse, der noch konisch ist, radial nach außen gedrückt, um dadurch das Außengewinde der Buchse fest in das Gegengewinde einzudrücken. Dadurch wird eine Gasdichtigkeit erreicht.

Der Herstellungsaufwand bei dieser Vorgehensweise ist beachtlich. Darüber hinaus müssen die beim Gewindeschneiden entstehenden Schneidspäne entfernt werden. Hierzu ist es schon vorgeschlagen worden, einen Luftstrom zu erzeugen, der die entstehenden Schneidspäne durch Span abführende Nuten des Gewindeschneiders entfernt (EP 460 517).

Weiterhin ist es bekannt, eine Gewindebüchse selbstschneidend auszubilden, zu welchem Zweck sie an dem in das Innere der Bohrung hinein gerichteten vorderen Ende zwei radial und axial verlaufende Schneidschlitze aufweist. Auch hierbei entstehen Späne, die entfernt werden müssen (DE 3138810).

Der Erfindung liegt die Aufgabe zu Grunde, das Erneuern oder erstmalige Bilden von Gewinden in einer Bohrung bei Beibehaltung der bekannten Vorteile weiter zu verbessern.

Zur Lösung dieser Aufgabe schlägt die Erfindung eine Gewindebuchse mit den Merkmalen des Anspruchs 1 und/oder ein Verfahren mit den Merkmalen des Anspruchs 6 und/oder ein Werkzeug mit den Merkmalen des Anspruchs 12 vor. Weiterbildungen der Erfindung sind Gegenstand von Unteransprüchen.

Diese Gewindebuchse enthält, ähnlich wie im Stand der Technik, an ihrem einen Ende einen äußeren Bund, der beim Einschrauben zur Anlage an einer Gegenfläche gelangt, dadurch die Einschraubtiefe begrenzt und somit eine exakte axiale Positionierung der Gewindebuchse gewährleistet.

In der Gewindebuchse ist ein Innengewinde angeordnet, nämlich das Innengewinde, das nach Fertigstellung das endgültige Innengewinde sein soll. An der Außenseite ist, von dem Bund ausgehend, ein Außengewinde angeordnet, das im Bereich des Einschraubendes als selbstfurchendes Gewinde ausgebildet ist. Im Gegensatz zum Stand der Technik ist die Gewindebuchse zylindrisch, weist also nach Fertigstellung und vor Einschrauben schon ihre endgültige Form auf.

Da die Gewindebuchsen häufig dazu verwendet werden sollen, ein bestehendes beispielsweise beschädigtes Gewinde zu erneuern, und an der Stelle, wo das Gewinde erneuert werden soll, häufig wenig Platz zur Verfügung steht, ist es vorgesehen, dass das Innengewinde und das Außengewinde die gleiche Gewindesteigung aufweisen und derart angeordnet sind, dass die Buchse im Bereich beider Gewinde eine konstante Wandstärke aufweist.

Erfindungsgemäß kann in Weiterbildung vorgesehen sein, dass das Außengewinde an dem Einschraubende von einem Gewindegrund konstanten Durchmessers ausgehend in Richtung auf das Bundende eine zunehmende Gewindehöhe aufweist. Mit anderen Worten liegt in einer axialen Draufsicht die Gewindekante auf einer Spirale.

Die Verwendung eines selbstfurchenden Gewindes an der Gewindebuchse hat den Vorteil, dass ein vollständiger Arbeitsgang, nämlich des Schneiden des Gewindes, entfällt. Darüber hinaus wird auch das Entstehen der Späne und der damit verbundene Vorgang des Entfernens der Späne vermieden.

Erfindungsgemäß kann vorgesehen sein, dass das Innengewinde nicht vollständig bis zum Einschraubende reicht. Dort kann eine Stelle gebildet sein, wo eine glattflächige Durchgangsöffnung vorhanden ist.

Insbesondere eignet sich eine aus Stahl, eventuell auch gehärtet, bestehende Gewindebuchse für das Einschrauben in ein aus Aluminium bestehendes Bauteil.

Erfindungsgemäß wird zum erstmaligen Einbringen eines Gewindes in eine Bohrung so vorgegangen, dass in die glatte Bohrung eine das gewünschte Innengewinde und ein selbstfurchendes Außengewinde aufweisende Buchse mit einem Bund am äußeren Ende eingesetzt und die Buchse solange eingeschraubt wird, bis ihr Bund an der Außenseite des Bauteils anliegt. Durch das Einschrauben erfolgt eine formschlüssige und kraftschlüssige Verbindung der Gewindebuchse mit dem Bauteil. Erfindungsgemäß wird noch nach dem Einschrauben der Gewindebuchse diese in ihrem vorderen Bereich radial aufgeweitet; beim Aufweiten des Einschraubendes der Gewindebuchse wird auch das Innengewinde bis zum vorderen Ende der Gewindeuchse ausgeformt.

Falls ein bestehendes und möglicherweise beschädigtes Gewinde erneuert werden soll, wird die das Gewinde aufweisende Bohrung vor dem Einschrauben der Gewindebuchse aufgebohrt.

Wenn die Außenseite des Bauteils die gleiche Form und Anordnung haben soll wie vor dem Erneuern des Gewindes, kann erfindungsgemäß in Weiterbildung vorgesehen sein, dass die Außenseite des die Bohrung aufweisen Bauteils rings um die Bohrung angesenkt wird, damit der Bund an der Außenseite der Gewindebuchse in diese Ansenkung zu liegen kommt und außen nicht vorsteht.

Damit die beim Furchen des Gewindes auftretenden großen Kräfte nicht zu einer Verformung der Gewindebuchse führen, kann erfindungsgemäß in Weiterbildung vorgesehen sein, dass beim Einschrauben der Gewindebuchse ihre Innenöffnung, insbesondere das Innengewinde, radial abgestützt wird.

In nochmaliger Weiterbildung wird vorgeschlagen, dass zum Einschrauben der Gewindebuchse ein Werkzeug verwendet wird, das mit einem Gewindeschaft in das Innengewinde der Gewindebuchse eingeschraubt wird. Dieser Gewindeschaft dient gleichzeitig zum Abstützen der Gewindebuchse von der Innenseite her, so dass diese sich nicht nach innen verformen kann. Zum Aufbringen des erforderlichen Drehmoments kann das Werkzeug eine Anlagefläche aufweisen, an der der Bund der Gewindebuchse zur Anlage gelangt.

Es ist auch vorgesehen, dass die Steigung des die beiden Teile des Werkzeugkopfs verbindenden Gewindes größer ist als die Steigung des Gewindeschafts, insbesondere deutlich größer. Die Steigung kann so groß gemacht werden, das keine Selbsthemmung auftritt, so dass sich das Werkzeug leicht aus der eingedrehten Gewindebuchse lösen lässt.

Das von der Erfindung vorgeschlagene Werkzeug enthält einen Werkzeugkopf, der aus zwei axial hintereinander angeordneten Teilen aufgebaut ist. Mit einem der beiden Teile des Werkzeugkopfs ist ein Gewindeschaft mindestens zugfest verbunden oder verbindbar. Dieser Gewindeschaft, wenn er mit dem entsprechenden Teil verbunden ist, ragt durch einen axialen Durchgang des anderen Teils des Werkzeugkopfs hindurch. An seinem hindurch ragenden freien Ende ist der Gewindeschaft zum Schraubeingriff in die Gewindehülse ausgebildet. Weiterhin enthält das Werkzeug einer Einrichtung, um den axialen Abstand der beiden Teile des Werkzeugkopfs zu ändern, insbesondere zu verkleinern.

Beim Einschrauben der Gewindebuchse mit einem in das Innengewinde der Gewindebuchse eingreifenden Gewindeschaft muss das weitere Verdrehen des Gewindeschafts gegenüber der Gewindebuchse verhindert werden, da sonst nur der Gewindeschaft durch die Buchse hindurch gedreht wird, ohne dass sich die Gewindebuchse gegenüber dem Bauteil bewegt. Dies führt aber zu einer Verklemmung zwischen dem Gewindeschaft und der Gewindebuchse. Es besteht die Gefahr, dass beim Zurückdrehen des Gewindeschafts dieser sich nicht aus der Gewindebuchse löst, sondern die Gewindebuchse wieder aus dem Bauteil heraus schraubt. Um die Verklemmung bzw. Verspannung zu lösen, ist die Einrichtung zur Verkleinerung des Abstands zwischen den beiden Teilen des Werkzeugkopfs vorgesehen. Durch ihre Betätigung löst sich die Spannung zwischen der Gewindebuchse und dem Werkzeugkopf, so dass sich jetzt der Gewindeschaft leicht heraus drehen lässt.

Der Gewindeschaft kann beispielsweise mit dem einen Teil des Werkzeugkopfs einstückig ausgebildet sein. Damit ist sowohl eine zugfeste Verbindung als auch eine drehfeste Verbindung gegeben, so dass zum Einschrauben der Werkzeugkopf selbst verdreht werden kann.

Besonders sinnvoll ist es aber, wenn in Weiterbildung vorgesehen ist, dass der Gewindeschaft ein Gewindebolzen ist, der in eine mit einem Gewinde versehene Bohrung des zugeordneten Werkzeugkopfteils einschraubbar ist und der im Bereich seines äußeren Endes mit einem Schlüsselangriff versehen ist. Dadurch wird es möglich, ein handelsübliches Teil zu verwenden, das sich auch leicht austauschen oder erneuern lässt. Insbesondere wird es auf diese Weise möglich, eine Sollbruchstelle vorzusehen. Damit kann das maximale Einschraubdrehmoment der Gewindebuchse begrenzt werden.

Die beiden Teile des Werkzeugkopfs können beispielsweise miteinander verschraubt sein, wobei der Gewindesinn dieser Verschraubung umgekehrt ist gegenüber dem Gewindesinn des Gewindeschafts. Dadurch kann, wenn die Gewindebuchse mit einem Rechtsgewinde eingeschraubt wird, durch Linksdrehen an dem Werkzeugkopf der axiale Abstand dieser beiden Teile verkleinert werden.

Insbesondere kann es sich bei diesem Gewinde um ein Trapezgewinde handeln.

Erfindungsgemäß kann der Werkzeugkopf eine eigene Schlüsselfläche aufweisen, die dann zum Ändern des Abstands der beiden Teile verwendet wird.

Die Einrichtung zum Verändern des axialen Abstands der beiden Teile des Werkzeugkopfs kann auch dazu dienen, einen Längenunterschied zwischen dem Gewindeschaft und der Gewindebuchse auszugleichen.

Zur exakten Positionierung kann vorgesehen sein, dass an dem der Buchse zugeordneten Teil des Werkzeugkopfs ein Bund zur Anlage an dem Bund der Gewindebuchse ausgebildet wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine zur Hälfte geschnittene Seitenansicht einer Gewindebuchse nach der Erfindung;
- Figur 2: einen Axialschnitt durch den ersten Teil eines Werkzeugkopfs eines Werkzeugs zum Einschrauben der Buchse der Figur 1;
- Figur 3: einen Axialschnitt durch den zweiten Teil des Werkzeugkopfs und
- Figur 4: das aus den in Figur 2 und Figur 3 dargestellten Teilen zusammengesetzte Werkzeug;
- Figur 5: schematisch einen Teilschnitt durch eine mit einem Werkzeug nach den Figuren 2 bis 4 eingesetzte Gewindebuchse.

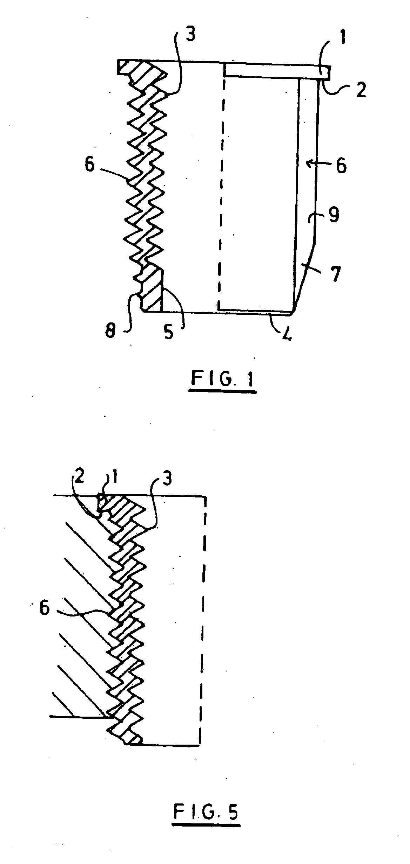

In Figur 1 ist zunächst die einzuschraubende Gewindebuchse dargestellt, in der linken Hälfte im Schnitt und in der rechten Hälfte in der Ansicht. Die Gewindebuchse ist etwa zylindrisch ausgebildet und weist im Bereich ihres einen Endes einen nach außen gerichteten umlaufenden Bund 1 auf. Dieser Bund 1 weist eine ebene Unterseite zur Bildung einer Schulter 2 auf. In der Innenseite der Gewindebuchse ist ein Innengewinde 3 vorhanden, das sich von dem in Figur 1 oberen Ende ausgehend über den größten Teil der Länge der Gewindebuchse erstreckt und kurz vor dem in Figur 1 unteren Ende 4 endet. Dort geht die Innenöffnung in eine glatte Wand 5 über. Das Innengewinde 3 ist das Gewinde, das dann später benutzt werden soll. Beispielsweise ist es das Gewinde, in das eine Zündkerze eingeschraubt wird. Daher ist die Ausbildung des Gewindes 3 in der Gewindebuchse auf den Anwendungsfall abgestimmt.

An der Außenseite der Gewindebuchse ist ein Außengewinde 6 ausgebildet, das von der den Bund 1 begrenzenden Schulter 2 ausgeht. Im Bereich des gegenüberliegenden Endes 4 beginnt das Außengewinde 6 in einem sich über vier Gewindegänge erstreckenden Anschnitt. In diesem Bereich 7 bewegt sich die Gewindekante 8 auf einer in Draufsicht spiralförmigen Linie, nimmt also in ihrem Abstand von der Mittelachse ständig zu, bis sie den zylindrischen Bereich des Gewindes 9 erreicht.

Durch diese Ausgestaltung ist das Außengewinde 6 als Furchgewinde ausgebildet. Wird diese Buchse in eine Bohrung eingeschraubt, so furcht sich dieses Gewinde ein Gegengewinde in der Wand der Bohrung.

Das Innengewinde 3 und das Außengewinde 6 haben die gleiche Steigung und sind so angeordnet, dass der Kerndurchmesser des Außengewindes 6 an der gleichen Stelle liegt wie der Spitzendurchmesser des Innengewindes, also die Stelle kleinsten Durchmessers innerhalb der Gewindehülse. Dadurch ist die Wandstärke der Gewindehülse im Bereich der beiden Gewinde immer konstant.

Die von der Erfindung vorgeschlagene und in Figur 1 in einem Beispiel dargestellte Gewindebuchse hat den Vorteil, dass ein Gewindeschneiden vor dem Eindrehen der Buchse nicht erforderlich ist und dass beim Eindrehen keine Späne entstehen.

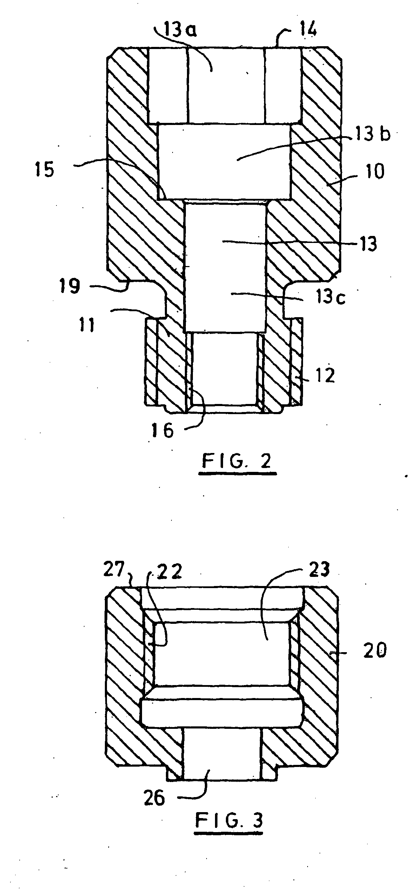

Da beim Eindrehen der Gewindebuchse wegen des Einfurchens des Gegengewindes in der Bohrung Widerstandsmomente und starke nach innen gerichtete Kräfte auftreten, schlägt die Erfindung ein spezielles Werkzeug vor, mit dessen Hilfe sich die Gewindebuchse besonders einfach eindrehen lässt. Dieses Werkzeug ist in Figur 2 bis 4 dargestellt. Es enthält einen Werkzeugkopf, der aus zwei miteinander verbundenen bzw. verbindbaren Teilen besteht. Diese beiden Teile sind in Figur 2 beziehungsweise Figur 3 dargestellt. Zunächst wird also der Werkzeugkopf anhand der Figur 2 näher erläutert. Figur 2 zeigt den ersten der Gewindebuchse abgewandten Teil 10 des Werkzeugkopfs. Er ist zylindrisch ausgebildet und weist im Bereich seines einen in Figur 2 unteren Endes einen Ansatz 11 mit einem Außengewinde 12 auf. Bei dem Außengewinde 12 handelt es sich um ein Trapezgewinde mit einer großen Gewindesteigung. Im dargestellten Beispiel handelt es sich um ein Linksgewinde.

Der erste Kopfteil 10 des Werkzeugkopfs enthält einen abgestuften Durchgang 13 in axialer Richtung. An dem äußeren der Gewindebuchse abgewandten Ende 14 weist der Durchgang die Querschnittsform eines Sechsecks auf. Dieser Bereich mit dem Sechseck dient als Schlüsselfläche zum Ansetzen eines Schraubenschlüssels. An diesen Bereich mit sechseckigem Querschnitt schließt sich ein zweiter Bereich 13 b mit einem kreisrunden Querschnitt an. Dieser Bereich bildet eine Schulter 15. Mittig in der die Schulter 15 aufweisenden Fläche ist ein wiederum kreiszylindrischer Bereich 13 c mit einem verringerten Durchmesser ausgebildet. An dem jetzt folgenden Ende dieses Durchgangs 13 c ist ein Innengewinde 16 ausgebildet, bei dem es sich um ein Rechtsgewinde mit einer Steigung handelt, die der Steigung des Innengewindes 3 der Gewindebuchse gleich ist.

Figur 2 zeigt den zweiten Teil 20 des Werkzeugkopfs. Auch dieser zweite Teil 20 weist einen axialen Durchgang 23 auf, sowie eine zylindrische Außenform. Der Außendurchmesser des zweiten Teils 20 entspricht etwa dem größeren Außendurchinesser des ersten Teils 10 des Werkzeugkopfs. In dem Durchgang 23 ist etwa in der Mitte der Axialerstreckung ein Innengewinde 22 angeordnet, das dem Außengewinde 12 des Ansatzes 11 entspricht. Es handelt sich also um ein Linksgewinde in Form eines Trapezes. An der in Figur 3 unteren Seite des zweiten Teils 20 mündet der Durchgang 23 in einem Bereich 26, der einen Durchmesser aufweist, der etwas größer ist als der Spitzendurchmesser des Gewindes entsprechend dem Innengewinde 16.

In den ersten Teil 10 des Werkzeugkopfs, siehe Figur 2, kann von oben her ein Gewindestab mit einer Schlüsselfläche eingeschoben und dann in das Innengewinde 16 eingeschraubt werden. Dieser Gewindestab bildet einen Gewindeschaft, der aus dem ersten Teil des Werkzeugkopfs in Figur 2 nach unten herausragt. Nun kann der zweite Teil 20 des Werkzeugkopfs auf das Außengewinde 12 des Ansatzes 11 aufgeschraubt werden. Dabei greift der Gewindeschaft durch den axialen Durchgang 23 des zweiten Teils des Werkzeugkopfs hindurch und ragt aus der Öffnung 26 heraus.

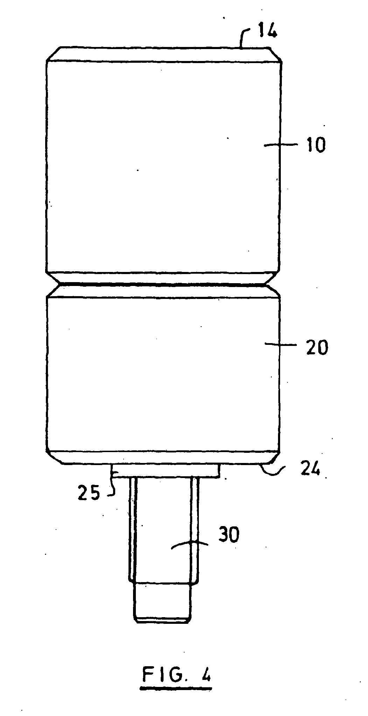

Durch das Einschrauben des Gewindeschafts in das Gewinde 16 ist dieser mit dem Werkzeugkopf zugfest verbunden. Das Ergebnis der gerade geschilderten Zusammensetzung ist in Figur 4 dargestellt. Dort ist eine Stellung zu sehen, in der der zweite Teil 20 des Werkzeugkopfs so auf den Ansatz 11 des ersten Teils 10 aufgeschraubt ist, dass die einander zugewandten Flächen der beiden Teile aneinander anliegen. Der Gewindeschaft 30 ist in der beschriebenen Weise eingesetzt. Er kann beispielsweise an dem der Gewindebuchse abgewandten Ende eine Innenöffnung mit der Querschnittsform eines Sechsecks aufweisen. Dann kann dort ein Schlüssel angesetzt werden. Der Gewindeschaft kann so weit in den Werkzeugkopf eingeschraubt werden, dass sein oberes Ende unterhalb der Trennlinie zwischen den Bereichen 13 a und 13 b zu liegen kommt.

Es ist aber auch möglich, einen Gewindeschaft mit einem üblichen verbreiterten sechseckigen Kopf zu verwenden, der dann im Bereich 13 b zu liegen kommt. Wichtig ist nur, dass der Gewindeschaft von der Außenseite her verdreht werden kann.

Wie man der Figur 4 ebenfalls entnehmen kann, ist an der der Gewindebuchse zugewandten Stirnfläche 24 des Werkzeugkopfs ein umlaufender Bund 25 ausgebildet, der dem Bund 1 der Gewindebuchse 1 entspricht.

Zum Erneuern eines Gewindes wird folgendermaßen vorgegangen. Die das Gewinde aufweisende Bohrung wird aufgebohrt, mit einem Durchmesser, der auf den Außendurchmesser des Außengewindes 6 der Gewindebuchse abgestimmt ist. Anschließend wird das Werkzeug so zusammengesetzt, wie es die Figur 4 zeigt. Jetzt wird die Gewindebuchse auf den aus dem Werkzeugkopf heraus ragenden Teil des Gewindeschafts 3 aufgeschraubt. Dies geschieht solange, bis der Gewindeschaft 30 am Ende des Innengewindes 3 der Gewindebuchse zur Anlage kommt und ein weiteres Aufschrauben nicht mehr möglich ist.

Jetzt muss zwischen der Oberseite des Bundes 1 der Gewindebuchse und dem Bund 25 des Werkzeugkopfs noch ein Abstand vorhanden sein. Nun werden die beiden Teile 10, 20 des Werkzeugkopfs so weit gegeneinander verdreht, bis dieser Abstand verschwunden ist, das Einschraubende 4 der Gewindebuchse in die Bohrung eingesetzt und der Gewindeschaft 30 durch Angreifen an der erwähnten Schlüsselfläche unter Ausübung eines axialen Drucks verdreht. Da der Bund 25 durch Anliegen an dem Bund 1 der Gewindebuchse ein weiteres Eindrehen des Gewindeschafts in die Buchse verhindert, wird die Buchse mit verdreht und formt sich dadurch ihr Gegengewinde in der Wand der Bohrung. Dies geschieht solange, bis die an der Unterseite des Bundes 1 gebildete Schulter 2 zur Anlage an einer Gegenfläche gelangt. Damit ist die Verbindung zwischen Gewindebuchse und Bauteil hergestellt.

Bei diesem Vorgang des Gewindefurchens verspannt sich die Gewindebuchse gegenüber dem Gewindeschaft. Um diese Spannung wieder zu lösen, wird durch Angreifen an der Schlüsselfläche im Abschnitt 13 a des Werkzeugkopfs mit Hilfe eines Schlüssels der Werkzeugkopf in umgekehrter Drehrichtung gedreht, also links herum. Wegen der großen Steigung des Trapezgewindes tritt dort keine Selbsthemmung auf, so dass sich die Spannung zwischen der Gewindebuchse und dem Gewindeschaft löst. Beim Linksdrehen bleibt die Gewindebuchse also in dem Bauteil.

Durch die Auswahl des Gewindeschafts im Hinblick auf seine Festigkeit kann ein bestimmtes maximales Eindrehmoment bzw. Überdrehmoment eingestellt werden.

Beim Eindrehen der Gewindebuchse ist zwischen den beiden Teilen 10, 20 des Werkzeugkopfs ein Abstand vorhanden, damit nach dem vollständigen Eindrehen der Gewindebuchse durch Drehen in umgekehrter Richtung der Abstand verringert werden kann, um dadurch die Spannung wieder zu lösen. Dies ist erforderlich, um das Werkzeug wieder aus der Gewindebuchse heraus zu drehen.

Nach dem Eindrehen der Gewindebuchse kann folgendermaßen weiter gearbeitet werden. Es wird an den Werkzeugkopf nur etwas nach links gedreht, um die Spannung zu lösen. Anschließend erfolgt die Verstellung zwischen den beiden Teilen soweit, dass der Gewindeschaft tiefer in die Gewindebuchse eingeschraubt werden kann. Wie man der Figur 1 entnehmen kann, reicht das Innengewinde 3 nur so weit, wie das Außengewinde noch zylindrisch ist. In dem Teil der Gewindebuchse, in dem vom Einschraubende 4 ausgehend das Außengewinde nur allmählich beginnt, ist kein Innengewinde ausgeformt. Nach dem vollständigen Setzen wird nun durch weiteres Einschrauben des Gewindeschafts 30 der Bereich des Einschraubendes radial aufgeweitet und gleichzeitig das Innengewinde 3 auch in diesem Bereich ausgeformt. Bei diesem Vorgang wird nur der Gewindeschaft 30 gegenüber der sich nicht mitdrehenden Gewindebuchse verdreht. Während dieses Vorgangs wird keine Drehbewegung mehr auf die Gewindebuchse selbst übertragen, da diese mit ihrem Bund 1 anliegt. Der Werkzeugkopf braucht daher während dieses Vorgangs nicht gegenüber der Gewindebuchse verspannt zu werden.

Das Ergebnis des radialen Aufweitens und des Ausformens des Innengewindes durch das gerade beschriebene weitere Einschrauben des Gewindeschafts ist in Figur 5 dargestellt. Figur 5 zeigt schematisch die Form, die die Gewindebuchse nach dem vollständigen Setzen einnimmt. Das an der Innenseite bis zum vorderen Ende ausgeformte Innengewinde drückt sich auch an der Außenseite durch, so dass hierdurch gleichzeitig auch die Gasdichtigkeit der Verbindung nochmals gesteigert wird.

## Patentansprüche

1. Gewindebuchse zum Einschrauben in Bohrungen, mit
1.1 einem Bund (1) an einem Ende der Gewindebuchse,
1.2 einem von dem den Bund (1) aufweisenden Ende ausgehenden Innengewinde (3) und
1.3 einem sich an den Bund (1) anschließenden Außengewinde (6), das
1.4 als selbstfurchendes Gewinde (6) ausgebildet ist,
**dadurch gekennzeichnet, dass**
1.5 das Innengewinde (3) und das Außengewinde (6) die gleiche Gewindesteigung aufweisen und derart angeordnet sind, dass die Gewindebuchse im Bereich der Gewinde (3, 6) eine konstante Wandstärke aufweist.

2. Gewindebuchse nach Anspruch 1, bei der das Außengewinde (6) an dem Einschraubende (4) von einen Gewindegrund konstanten Durchmessers ausgehend eine in Axialrichtung zunehmende Gewindehöhe aufweist.

3. Gewindebuchse nach Anspruch 1 oder 2, bei der das Innengewinde (3) nicht vollständig bis zu dem Einschraubende (4) reicht.

4. Gewindebuchse nach einem der vorhergehenden Ansprüche, bei der die Gewindebuchse aus Stahl besteht.

5. Gewindebuchse nach einem der Ansprüche 3 bis 5, bei der das Einschraubende (4) nach dem Setzen der Gewindebuchse aufweitbar ist.

6. Verfahren zum Bilden eines Gewindes in einer Bohrung, mit folgenden Verfahrensschritten:
6.1 in die Bohrung wird eine das Innengewinde (3) und ein selbstfurchendes Außengewinde (6) aufweisende Gewindebuchse mit einem Bund (1) am äußeren Ende eingesetzt, und
6.2 die Gewindebuchse wird bis zur Anlage des Bundes (1) an der Außenseite des die Bohrung aufweisenden Bauteils eingeschraubt, und
6.3 nach dem Einschrauben der Gewindebuchse diese in ihrem vorderen Bereich radial aufgeweitet wird
**dadurch gekennzeichnet, dass**
6.4 beim Aufweiten des Einschraubendes (4) der Gewindebuchse das Innengewinde (3) bis zum vorderen Ende der Gewindebuchse (4) ausgeformt wird.

7. Verfahren nach Anspruch 6, bei dem die Außenseite des die Bohrung aufweisenden Bauteils rings um die Bohrung angesenkt wird.

8. Verfahren nach Anspruch 6 oder 7, bei dem zum Erneuern eines vorhandenen Gewindes die dieses Gewinde aufweisende Bohrung vor dem Einschrauben der Gewindebuchse aufgebohrt wird.

9. Verfahren nach einem der Ansprüche 6 bis 8, bei dem beim Einschrauben der Gewindebuchse das Innengewinde (3) der Gewindebuchse radial abgestützt wird.

10. Verfahren nach einem der Ansprüche 6 bis 9, bei dem zum Einschrauben der Gewindebuchse ein Werkzeug verwendet wird, das mit einem Gewindeschaft (30) in das Innengewinde (3) der Buchse eingeschraubt wird und das an dem Bund (1) der Gewindebuchse axial anliegt.

11. Verfahren nach einem der Ansprüche 6 bis 10, bei dem die Gewindebuchse durch das Aufweiten gasdicht mit der Bohrung verbunden wird.

12. Werkzeug zum Eindrehen einer Gewindebuchse nach einem der Ansprüche 1 bis 5, mit
12.1 einen Werkzeugkopf, der
12.2 aus zwei axial hintereinander angeordneten Teilen (10, 20) aufgebaut ist,
12.3 einem Gewindeschaft (30), der
12.3.1 mit dem einen Teil (10) des Werkzeugkopfs mindestens zugfest verbunden bzw. verbindbar ist,
12.3.2 durch einen axialen Durchgang (23) des anderen Teils des Werkzeugkopfs hindurch ragt und
12.3.3 mit seinen dortigen freien Ende zum Schraubeingriff in die Gewindebuchse ausgebildet ist, sowie mit
12.4 einer Einrichtung zum Verändern des axialen Abstands der beiden Teile (10, 20) des Werkzeugkopfs, auch unter Spannung
**dadurch gekennzeichnet, dass**
12.5 die Steigung des die beiden Teile (10, 20) des Werkzeugkopfs verbindenden Gewindes größer ist als die Steigung des Gewindeschafts (30), insbesondere deutlich größer.

13. Werkzeug nach Anspruch 12, bei dem der Gewindeschaft (30) ein in eine Gewindebohrung (16) des zugeordneten Werkzeugkopfteils einschraubbarer Gewindebolzen mit einem Schlüsselangriff an seinem äußeren Ende ist.

14. Werkzeug nach Anspruch 13, bei dem der Gewindeschaft (30) mit dem Werkzeugkopf einstückig ausgebildet ist.

15. Werkzeug nach einem der Ansprüche 12 bis 14, bei dem die beiden Teile (10, 20) des Werkzeugkopfs miteinander verschraubt sind, wobei der Gewindesinn des die Teile (10, 20) miteinander verbindenden Gewindes umgekehrt ist zu dem Gewindesinn des Gewindeschafts (30).

16. Werkzeug nach einem der Ansprüche 12 bis 15, bei dem der Werkzeugkopf eine eigene Schlüsselfläche (13 a) aufweist.

17. Werkzeug nach einem der Ansprüche 12 bis 16, bei dem das die beiden Teile (10, 20) des Werkzeugkopfs verbindende Gewinde ein ein- oder mehrgängiges Trapezgewinde ist.

18. Werkzeug nach einem der Ansprüche 12 bis 17, bei dem die Einrichtung zum Verändern des axialen Abstands zwischen den beiden Teilen (10, 20) des Werkzeugkopfs auch zum Ausgleich von Längenunterschieden zwischen dem Gewindeschaft (30) und der Gewindebuchse vorgesehen ist.

19. Werkzeug nach einem der Ansprüche 12 bis 18, bei dem an dem der Gewindebuchse zugeordneten Teil (20) des Werkzeugkopfs ein Bund (25) zur Anlage an dem Bund (1) der Gewindebuchse vorgesehen ist.

20. Werkzeug nach einem der Ansprüche 12 bis 19, bei dem der Verstellbereich zwischen den beiden Teilen (10, 20) des Werkzeugkopfs derart ausgebildet ist, dass der Gewindeschaft (30) sowohl zum Eindrehen der Gewindebuchse als auch zu einem anschließenden Aufweiten der Gewindebuchse verwendbar ist.

21. Werkzeug nach Anspruch 20, bei dem der Verstellbereich zwischen den beiden Teilen (10, 20) des Werkzeugkopfs derart ausgebildet ist, dass der Gewindeschaft (30) zu einem Ausformen des Innengewindes (3) der Gewindebuchse bis zu deren Ende verwendbar ist.

## Claims

1. A threaded insert for screwing in holes, with
1.1 a collar (1) at one end of the threaded insert,
1.2 an internal thread (3) starting from the end featuring the collar (1) and
1.3 an external thread (6) adjoining the collar (1), which
1.4 is formed as a self-tapping thread (6),
**characterised in that**
1.5 the internal thread (3) and the external thread (6) feature the same thread lead and are disposed such that the threaded insert features a constant wall thickness in the area of the thread (3, 6).

2. The threaded insert according to Claim 1, wherein the external thread (6) on the screw-in end (4) originating from a thread root of constant diameter features a thread height that increases in axial direction.

3. The threaded insert according to Claim 1 or 2, wherein the internal thread (3) does not continue fully up to the screw-in end (4).

4. The threaded insert according to one of the preceding Claims, wherein the threaded insert is made of steel.

5. The threaded insert according to one of the Claims 3 to 5, wherein the screw-in end (4) is expandable after placing the threaded insert in place.

6. A process for tapping a thread in a hole, with the following process steps:
6.1 a threaded insert, with a collar (1) on the outer end, is placed in the hole that features an internal thread (3) and a self-tapping external thread (6), and
6.2 the threaded insert is screwed in until the collar (1) touches the outside of the component featuring the hole, and
6.3 after screwing the threaded insert, the said is expanded radially in its front section
**characterised in that**
6.4 by expansion of the screw-in end (4) of the threaded insert, the internal thread (3) is formed up to the front end of the threaded insert (4).

7. The process according to Claim 6, wherein the outside of the component featuring the hole is countersunk around the hole.

8. The process according to Claim 6 or 7, wherein, to renew an existing thread, the hole featuring this thread is drilled prior to screwing in the threaded insert.

9. The process according to one of the Claims 6 to 8, wherein, when screwing in the threaded insert, the internal thread (3) of the threaded insert is supported radially.

10. The process according to one of the Claims 6 to 9, wherein, to screw in the threaded insert, a tool is used, which is screwed in the internal thread (3) of the insert with a threaded shank (30) and which lies axially to the collar (1) of the threaded insert.

11. The process according to one of the Claims 6 to 10, wherein the threaded insert is connected, through expansion, with the hole in a gas-tight manner.

12. A tool for screwing in the threaded insert according to one of the Claims 1 to 5, with
12.1 a tool head, which
12.2 is made of two parts (10, 20) disposed axially in consecutively,
12.3 a threaded shank (30), which
12.3.1 is connected or is connectable with a part (10) of the tool head at least in the pull direction,
12.3.2 projects through an axial passage (23) of the other part of the tool head and
12.3.3 with its free end it is formed for screw mesh in the threaded insert, as well as with
12.4 a device for changing the axial gap between the two parts (10, 20) of the tool head, even under stress,
**characterised in that**
12.5 the thread pitch of the thread connecting the two parts (10, 20) of the tool head is greater than the thread pitch of the threaded shank (30), particularly it is clearly larger.

13. The tool according to Claim 12, wherein the threaded shank (30) is a stud bolt with a driving feature on its external end that is screw-able into a threaded hole (16) of the respective tool head.

14. The tool according to Claim 13, wherein the threaded shank (30) with the tool head is formed as a single piece.

15. The tool according to one of the Claims 12 to 14, wherein the two parts (10, 20) of the tool head are screwed together and the thread sense of the thread that connects the parts (10, 20) with one another is opposite the thread sense of the thread shank (30).

16. The tool according to one of the Claims 12 to 15, wherein the tool head features its own key surface area (13 a).

17. The tool according to one of the Claims 12 to 16, wherein the thread connecting the two parts (10, 20) of the tool head is a single- or multi-start trapezoidal thread.

18. The tool according to one of the Claims 12 to 17, wherein the device for changing the axial gap between the two parts (10, 20) of the tool head also means equalising the length differences between the threaded shank (30) and the threaded insert.

19. The tool according to one of the Claims 12 to 18, wherein a collar (25) of the threaded insert is provided on the part (20) of the tool head for supporting the threaded insert on the collar (1) of the threaded insert.

20. The tool according to one of the Claims 12 to 19, wherein the adjustment range between the two parts (10, 20) of the tool head is formed such that the threaded shank (30) is applicable both for screwing in the threaded insert as well as for subsequent expansion of the threaded insert.

21. The tool according to Claim 20, wherein the adjustment range between the two parts (10, 20) of the tool head is formed such that the threaded shank (30) is applicable for forming the internal thread (3) of the threaded insert down to the other end.

## Revendications

1. Douille filetée à visser dans des alésages, comprenant
1.1 un collet (1) à une extrémité de la douille filetée,
1.2 un filet intérieur (3) partant de l'extrémité présentant le collet (1) et
1.3 un filet extérieur (6) se raccordant au collet (1), qui
1.4 est réalisé en tant que filet autotaraudeur (6),
**caractérisé en ce que**
1.5 le filet intérieur (3) et le filet extérieur (6) présentent le même pas de filet et sont disposés de manière à ce que la douille filetée présente une épaisseur de paroi constante dans la partie des filets (3, 6).

2. Douille filetée selon la revendication 1, dans laquelle le filet extérieur (6) présente, sur l'extrémité de vissage (4) partant d'un fond de filet de diamètre constant, une hauteur de filet croissante en direction axiale.

3. Douille filetée selon la revendication 1 ou 2, dans laquelle le filet intérieur (3) n'atteint pas complètement l'extrémité à visser (4).

4. Douille filetée selon l'une quelconque des revendications précédentes, dans laquelle la douille filetée est en acier.

5. Douille filetée selon l'une quelconque des revendications 3 à 4, dans laquelle l'extrémité à visser (4) peut être élargie après la pose de la douille filetée.

6. Procédé destiné à former un filet dans un alésage, comprenant les étapes de procédé suivantes :
6.1 une douille filetée présentant le filet intérieur (3) et un filet extérieur (6) autotaraudeur et comprenant un collet (1) sur l'extrémité extérieure est insérée dans l'alésage, et
6.2 la douille filetée est vissée jusqu'à la butée du collet (1) sur le côté extérieur de la pièce de construction présentant l'alésage et
6.3 après le vissage de la douille filetée, celle-ci est élargie radialement dans sa partie avant,
**caractérisé en ce que**
6.4 lors de l'élargissement de l'extrémité à visser (4) de la douille filetée, le filet intérieur (3) est formé jusqu'à l'extrémité avant de la douille filetée (4).

7. Procédé selon la revendication 6, dans lequel le côté extérieur de la pièce de construction présentant l'alésage est creusé autour de l'alésage.

8. Procédé selon la revendication 6 ou 7, dans lequel, pour renouveler un filet existant, l'alésage présentant ce filet est alésé avant de visser la douille filetée.

9. Procédé selon l'une quelconque des revendications 6 à 8, dans lequel, lorsque la douille filetée est vissée, le filet intérieur (3) de la douille filetée est supporté radialement.

10. Procédé selon l'une quelconque des revendications 6 à 9, dans lequel, pour visser la douille filetée, on utilise un outil qui est vissé dans le filet intérieur (3) de la douille à l'aide d'une queue filetée (30) et qui est axialement en prise avec le collet (1) de la douille filetée.

11. Procédé selon l'une quelconque des revendications 6 à 11, dans lequel la douille filetée est raccordée à l'alésage de manière étanche au gaz en raison de l'élargissement.

12. Outil destiné à insérer une douille filetée selon l'une quelconque des revendications 1 à 5, comprenant
12.1 une tête d'outil qui
12.2 est constituée de deux parties (10, 20) disposées axialement l'une derrière l'autre,
12.3 une queue filetée (30) qui
12.3.1 est raccordée au moins de manière résistante à la traction, ou est raccordable, à l'une des parties (10) de la tête d'outil,
12.3.2 traverse un passage axial (23) de l'autre partie de la tête d'outil et
12.3.3 est réalisée avec son extrémité libre pour la prise de vissage dans la douille filetée, ainsi qu'
12.4 un dispositif destiné à modifier l'écart axial entre les deux parties (10, 20) de la tête d'outil, également sous tension
**caractérisé en ce que**
12.5 le pas du filet raccordant les deux parties (10, 20) de la tête d'outil est supérieur au pas de la queue filetée (30), notamment nettement supérieur.

13. Outil selon la revendication 12, dans lequel la queue filetée (30) est un boulon fileté pouvant être vissé dans un alésage fileté (16) de la partie d'outil correspondante, comprenant une prise de clé sur son extrémité extérieure.

14. Outil selon la revendication 13, dans lequel la queue filetée (30) est réalisée d'une seule pièce avec la tête d'outil.

15. Outil selon l'une quelconque des revendications 12 à 14, dans lequel les deux parties (10, 20) de la tête d'outil sont vissées ensemble, le sens de filetage du filet raccordant les parties (10, 20) entre elles étant inverse au sens de filetage de la queue filetée (30).

16. Outil selon l'une quelconque des revendications 12 à 15, dans lequel la tête d'outil présente une propre surface de clé (13a).

17. Outil selon l'une quelconque des revendications 12 à 16, dans lequel le filet raccordant les deux parties (10, 20) de la tête d'outil est un filet trapézoïdal à filet unique ou à plusieurs filets.

18. Outil selon l'une quelconque des revendications 12 à 17, dans lequel le dispositif destiné à changer l'écart axial entre les deux parties (10, 20) de la tête d'outil est également ménagé pour compenser des différences de longueur entre la queue filetée (30) et la douille filetée.

19. Outil selon l'une quelconque des revendications 12 à 18, dans lequel, sur la partie (20) de l'outil, tournée vers la douille filetée, un collet (25) est ménagé pour être appliqué sur le collet (1) de la douille filetée.

20. Outil selon l'une quelconque des revendications 12 à 19, dans lequel la zone d'ajustage entre les deux parties (10, 20) de la tête d'outil est réalisée de manière à ce que la queue filetée (30) soit utilisable aussi bien pour visser la douille filetée que pour un élargissement consécutif de la douille filetée.

21. Outil selon la revendication 20, dans lequel la zone d'ajustage entre les deux parties (10, 20) de la tête d'outil est réalisée de manière à ce que la queue filetée (30) soit utilisable pour former le filet intérieur (3) de la douille filetée jusqu'à l'extrémité de celle-ci.
